# FASCICULE DE BREVET EUROPEEN

(11) **EP 2 901 075 B1**
(45) Date de publication et mention de la délivrance du brevet: **26.06.2019**
(21) Numéro de dépôt: 13766383.7
(22) Date de dépôt: 26.09.2013
(51) Int. Cl.: F21S 41/24, F21S 43/239, F21S 43/249, F21V 8/00

(54) **GUIDE DE LUMIÈRE POUR UN DISPOSITIF D'ÉCLAIRAGE ET/OU DE SIGNALISATION DE VÉHICULE AUTOMOBILE**
LICHTLEITER FÜR EINE BELEUCHTUNGS- UND/ODER SIGNALISIERUNGSVORRICHTUNG EINES KRAFTFAHRZEUGS
LIGHT GUIDE FOR A MOTOR VEHICLE LIGHTING AND/OR SIGNALLING DEVICE

(30) Priorité: 26.09.2012 FR 1259017
(43) Date de publication de la demande: 05.08.2015
(73) Titulaire: Valeo Vision, 93012 Bobigny Cedex (FR)
(72) Inventeur: DOHA, Jean-François, F-49124 Saint Barthélémy d'Anjou (FR); GERMON, François, 49320 Vauchrétien (FR); LAMINETTE, Maxime, F-49100 Angers (FR)
(86) Numéro de dépôt international: PCT/EP2013/070120
(87) Numéro de publication internationale: WO 2014/049082

(56) Documents cités:
- EP-A2- 2 363 738
- DE-A1-102010 005 806
- FR-A1- 2 966 224
- US-A1- 2010 246 200
- US-A1- 2012 218 772

## Description

La présente invention concerne les dispositifs d'éclairage et/ou de signalisation pour véhicule automobile.

Il est connu de doter de tels dispositifs d'un guide de lumière ayant la forme d'une nappe et de LEDs (diodes électroluminescentes) dont les rayons lumineux sont acheminés par le guide jusqu'à la sortie du dispositif. On produit ainsi un faisceau lumineux à partir d'un guide de lumière ayant un profil linéaire rectiligne ou courbe (voir par exemple le document US2012/0218772).

Le faisceau lumineux présente un axe de direction globale autour duquel se répartit l'ensemble du faisceau, selon un angle d'ouverture donné. Or, lorsqu'on utilise un guide de lumière dont le profil est courbe, il peut être difficile de diriger le faisceau de lumière émis par le guide de lumière selon certaines directions, notamment vers l'intérieur du véhicule. On entend par faisceau lumineux dirigé vers l'intérieur du véhicule, la partie du faisceau dirigée vers l'avant et vers un axe central du véhicule.

En outre, l'aspect allumé du guide de lumière ayant un profil linéaire rectiligne ou courbe peut apparaître hétérogène voire discontinu le long de ce profil et/ou il peut ne pas y avoir de faisceau sortant du guide selon une direction donnée, la réflexion étant totale à l'intérieur du guide.

Un but de l'invention est de produire un guide de lumière permettant de réduire ces inconvénients.

A cet effet, l'invention telle que définie dans la revendication 1 a pour objet un guide de lumière pour un dispositif d'éclairage et/ou de signalisation de véhicule automobile, comportant :
- au moins une face d'entrée,
- au moins un coupleur,
- au moins une face de réflexion principale ,
- une face de sortie,
le guide étant agencé de sorte que, lorsqu'on dispose une source de lumière à un point prédéterminé par rapport au guide, la face d'entrée transmet au coupleur la lumière de la source et le coupleur transmet une partie de cette lumière à la face de réflexion principale qui la dirige, sous la forme d'un faisceau à rayons parallèles, directement ou indirectement, vers la face de sortie selon une direction formant un angle de 5° au maximum par rapport à l'axe optique du guide.

L'axe optique du guide est en particulier l'axe de direction globale du faisceau émis par le guide et autour duquel se répartit l'ensemble du faisceau, selon un angle d'ouverture donné.

Ainsi, les rayons du faisceau dirigés vers la face de sortie étant parallèles, ou formant au maximum un angle de 5°, avec l'axe optique du guide, il est plus aisé, pour l'homme du métier, de diriger le faisceau de lumière sortant du guide, par exemple pour répondre aux réglementations en vigueur.

En outre, grâce au faisceau à rayons parallèles, on répartit mieux les rayons émis vers la face de sortie et on améliore ainsi l'homogénéité du faisceau de lumière qui atteint la face de sortie.

On réduit également le risque de réflexion interne du faisceau sur la face de sortie.

Le guide peut en outre comporter l'une ou plusieurs des caractéristiques suivantes, prises seules ou en combinaison :
- Chaque coupleur est associé à une face de réflexion.
- La face d'entrée est de forme convexe ou concave. Ainsi, le faisceau de lumière entrant dans le guide est réfracté et transmis vers le coupleur.
- Le guide est agencé de sorte que la face de réflexion principale dirige le faisceau à rayons parallèles directement vers la face de sortie.
- Le guide comprend en outre une face de réflexion secondaire apte à réfléchir, vers la face de sortie, le faisceau provenant de la face de réflexion principale. On peut donc envisager d'aligner le coupleur et la face de réflexion selon un axe qui n'est pas parallèle à l'axe optique. Cela permet, notamment, de réduire l'encombrement du guide.
- La face de réflexion principale présente une section longitudinale comprenant deux branches.
- Le ratio de longueur entre la branche la plus petite de la section longitudinale de la face de réflexion principale et la branche la plus grande de la section longitudinale de la face de réflexion principale est supérieur à 0.8. Les deux branches étant de longueur similaire, le trajet de la lumière du coupleur vers la face de réflexion est sensiblement identique vers chaque branche de la face de réflexion. L'atténuation de l'intensité lumineuse due à l'absorption par le matériau constituant le guide est donc similaire pour chaque branche de la face de réflexion et le faisceau à rayons parallèles est donc plus homogène que si les branches de la parabole ont des longueurs de plus grande différence. Selon une réalisation de l'invention, les deux branches de la section longitudinale de la face de réflexion principale peuvent avoir une même longueur, permettant d'améliorer l'homogénéité.
- Les deux branches s'étendent de part et d'autre d'un plan de symétrie de la section longitudinale.
- La section longitudinale de la face de réflexion principale peut être une section parabolique. Ainsi, avec le coupleur agencé au niveau du foyer de la section parabolique, le coupleur transmet une partie de la lumière à la face de réflexion principale qui la redirige, sous la forme d'un faisceau à rayons parallèles ou environ parallèles à plus ou moins 5° près.
- La face de réflexion principale présente une section longitudinale avec des pans inclinés par rapport à l'axe optique du guide, par exemple deux pans inclinés de 45° par rapport à l'axe optique du guide. Le guide est agencé de manière à ce que les pans redirigent la lumière sous la forme d'un faisceau à rayons parallèles ou environ parallèles à plus ou moins 5° près. Il peut y avoir deux pans inclinés formant deux branches, qui peuvent s'étendre de part et d'autre d'un plan de symétrie de la section et avoir la même longueur.
- La face de réflexion comporte, au moins sur une portion de sa longueur, un aluminiage.
- La face de réflexion comporte, au moins sur une portion de sa longueur, une section transversale à profil en « V » formée par deux surfaces formant un angle entre elles, par exemple de 90°. Ainsi ces deux surfaces-ci peuvent fonctionner en réflexion interne totale des rayons lumineux, ce qui permet de ne pas utiliser d'aluminiage.
- Le guide de lumière présente une forme de nappe. On entend par nappe une forme délimitée dans le sens de l'épaisseur par deux faces sensiblement parallèles entre elles sur au moins une partie de la nappe. La nappe elle-même peut avoir une forme non plane.
- La face de sortie est de forme générale galbée. La face de sortie peut être galbée dans des plans perpendiculaires entre eux. Ainsi, vue perpendiculairement à l'axe optique, cette face peut présenter une forme courbe. Elle peut également présenter une autre forme courbe lorsque le guide est vu selon une direction parallèle à l'axe optique. On comprend donc que la face de sortie est galbée dans l'espace. La forme de la face de sortie peut donc être adaptée à la forme du véhicule sur lequel le guide est destiné à être monté.
- La face de sortie a la forme d'un escalier ayant des marches parallèles à plus ou moins 10° près par rapport à l'axe optique et des contres-marches comportant chacune au moins une facette de sortie de la lumière de sorte que la lumière sortant de chaque facette est répartie dans un cône dont l'axe est l'axe optique. L'angle d'ouverture de ce cône est par exemple d'au moins 100°. Par exemple pour un feu de recul, l'angle d'ouverture peut être compris entre 75 et 90°. Cet angle d'ouverture peut également être d'au moins 60°, de préférence 50°, encore plus préférentiellement 40°, notamment pour une fonction de feu diurne, encore appelé DRL. On comprend que les angles sont définis dans un plan horizontal lorsque le guide de lumière est positionné de manière similaire à la position qu'il aurait s'il était monté sur un véhicule automobile.
- Les marches, dans la direction de l'axe optique, et les contres-marches, dans une direction perpendiculaire à l'axe optique, ont chacune des dimensions inférieures à 5 mm, de préférence inférieures à 3 mm. On obtient ainsi un faisceau relativement homogène présentant peu de points chauds et/ou des points chauds peu intenses.
- La facette de la contre-marche est de forme convexe. Ainsi, les rayons qui sortent du guide par chaque facette sont réfractés de sorte que l'interaction des rayons sortant avec la marche adjacente est minimisée et qu'il n'y a pas ou peu de perte d'intensité du faisceau lumineux, notamment par réfraction du rayon vers l'intérieur du guide à travers la marche adjacente et réflexion du rayon sur cette même marche.
- Dans l'invention, le guide comporte au moins deux ensembles coupleurs - faces de réflexion principales. On peut augmenter la surface de la face de sortie du guide. On notera que les coupleurs peuvent avoir des géométries différentes.
- Les faces de réflexion principales sont reliées entre elles par au moins une face de liaison à section rectiligne, de préférence parallèle à l'axe optique du guide ou formant un angle inférieur à 5° avec l'axe optique. Ainsi, le démoulage du guide de lumière est facilité et la distribution lumineuse homogène. La tranche supportant les faces de réflexion principale et les faces de liaisons a ainsi de préférence une forme en escalier.
- Le guide de lumière est réalisé d'un seul tenant par moulage d'une matière plastique.

L'invention a aussi pour objet un ensemble d'un guide de lumière tel que défini précédemment et d'au moins une source de lumière, de préférence une LED.

L'invention a également pour objet un dispositif d'éclairage et/ou de signalisation pour véhicule automobile, notamment un projecteur, comprenant un guide de lumière tel que défini précédemment et/ou un ensemble selon la présente invention.

Un autre objet selon l'invention est un véhicule automobile comprenant un guide de lumière et/ou un ensemble et/ou un dispositif d'éclairage et/ou de signalisation selon la présente invention.

L'invention sera mieux comprise à la lecture des figures annexées, qui sont fournies à titre d'exemples et ne présentent aucun caractère limitatif, dans lesquelles :
- la figure 1 est une vue schématique d'un véhicule automobile comprenant au moins deux dispositifs d'éclairage selon l'invention ;
- la figure 2 est une vue de face d'un dispositif d'éclairage selon l'invention ;
- la figure 3 est une vue partielle du guide de lumière de la figure 2 selon la direction de la flèche III montrant le trajet des rayons lumineux ;
- la figure 4 est une vue en coupe selon l'axe IV-IV montrant le trajet des rayons lumineux ;
- la figure 5 est une vue à plus grande échelle d'un détail de la figure 3 montrant le trajet des rayons lumineux ;
- la figure 6 est une vue à plus grande échelle d'un détail, vu en perspective, de la figure 3 montrant le trajet des rayons lumineux ;
- la figure 7 est une vue à plus grande échelle d'un détail de la figure 3 montrant le trajet des rayons lumineux ;
- la figure 8 est une vue partielle d'un autre mode de réalisation du guide de lumière de la figure 2 selon la direction de la flèche III montrant le trajet des rayons lumineux ;
- la figure 9 est une section d'un coupleur utilisé dans le mode de réalisation de la figure 8 montrant le trajet des rayons lumineux ;

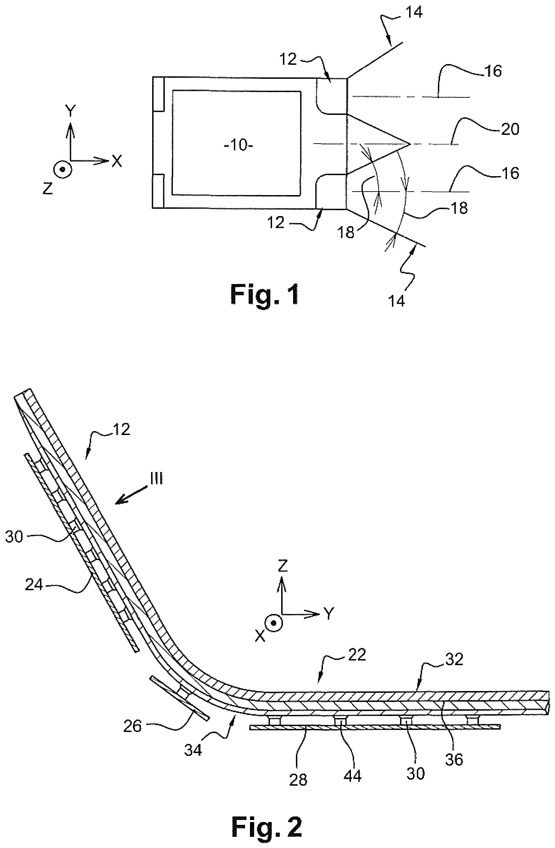

On a représenté sur la figure 1 un véhicule automobile 10 comprenant deux dispositifs d'éclairage 12. Chaque dispositif d'éclairage 12 émet un faisceau de lumière 14 selon un axe optique 16 qui est parallèle à l'axe longitudinal 20 du véhicule 10. En vue du dessus, le faisceau 14 forme un angle 18 de part et d'autre de l'axe optique 16. La partie du faisceau 14 dirigée vers l'axe longitudinal 20 est dirigée vers l'intérieur du véhicule 10 tandis que l'autre partie du faisceau 14 est dirigée vers l'extérieur du véhicule 10.

Pour plus de simplicité par la suite, on se réfèrera au repère orthonormé présenté sur les différentes figures, dans lequel la direction X est la direction de l'axe optique16 et de l'axe longitudinal 20, la direction Y est perpendiculaire à la direction X et forme avec l'axe X un plan horizontal. L'axe Z est vertical et est perpendiculaire au plan horizontal formé par les axes X et Y.

Le dispositif d'éclairage 12, représenté sur la figure 2, comprend un guide de lumière 22 ayant la forme générale d'une nappe délimitée dans le sens de l'épaisseur par deux faces principales de guidage 32, 34 sensiblement parallèles entre elles sur au moins une partie du guide 22. La nappe elle-même peut avoir une forme non plane comme on peut le voir sur la figure 2. La face de sortie 36 est située sur au moins une des tranches de ladite nappe 22.

Dans l'exemple décrit, le guide 22 est monolithique, c'est-à-dire réalisé d'un seul tenant, par exemple par moulage d'une matière plastique.

Le dispositif 12 comporte également, dans cet exemple trois cartes de circuit imprimé 24, 26, 28, disposées parallèlement à la face 34 du guide 22. Ces cartes 24, 26, 28 servent à alimenter, à contrôler et à porter des sources de lumière 30.

Les sources de lumière, dans le cas présent des LEDs 30, sont au nombre de dix. On comprend que ce nombre n'est pas limitatif et dépend notamment des dimensions du guide 22.

On notera que l'axe d'émission de lumière de chaque LED 30 est perpendiculaire à la nappe du guide 22. Cela permet avantageusement d'obtenir un dispositif plus compact dans une dimension parallèle à la nappe. En outre, les LEDs 30 portées par une même carte 24, 26, 28 sont dans un même plan, à la suite les unes des autres le long du chant du guide 22.

La lumière émise par chaque LED 30 pénètre dans le guide 22 par une face d'entrée de la lumière 44 parallèle à la nappe. La face d'entrée 44 est dans cet exemple plane. Elle pourrait être de forme convexe ou concave.

Le guide 22 est également délimité par une face de sortie de la lumière 36, des faces de réflexion principale de la lumière 38, une face de réflexion secondaire de la lumière 40 et des faces de liaison 42 reliant les faces de réflexion 38, 40. Les faces de liaison 42, ou au moins une portion de ces faces de liaison 42, sont de préférence parallèles à l'axe optique 16.

Le guide 22 comprend en outre des coupleurs 46, 47. Chaque coupleur 46, 47 comprend généralement plusieurs facettes de réflexion 48. Les coupleurs 46, 47 sont positionnés sur la face principale de guidage 32, en vis-à-vis de chaque face d'entrée 44. On comprend donc qu'à chaque face d'entrée 44 est associé un coupleur 46, 47. Des coupleurs de ce type sont par exemple décrits dans le document FR 2 943 118.

Chaque face d'entrée 44 est configurée pour transmettre la lumière émise par la LED 30 sur les facettes de réflexion 48 du coupleur 46, 47 qui lui est associé.

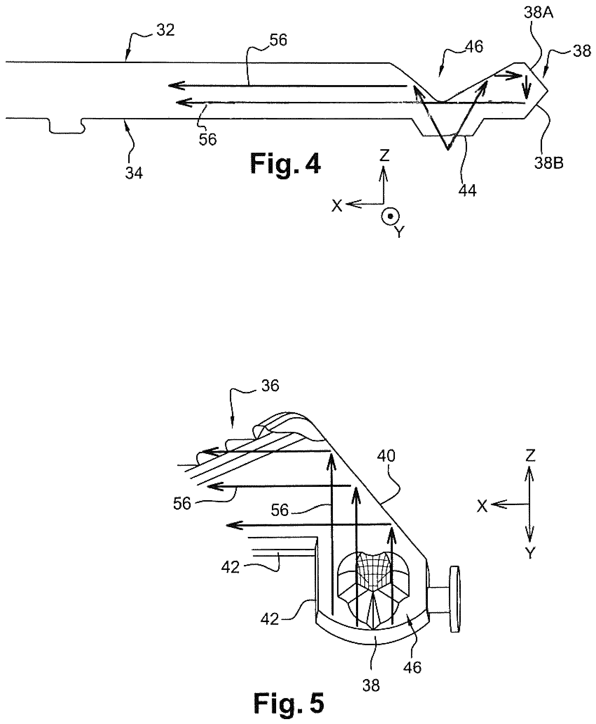

Une partie de la lumière transmise par la face d'entrée 44 au coupleur 46 est réfléchie par ce dernier et transmise directement vers la face de sortie 36 du guide 22, comme on peut le voir sur la figure 4.

Une autre partie de la lumière transmise par la face d'entrée 44 au coupleur 46 est transmise, par le coupleur 46 vers la face de réflexion principale 38 qui lui est associée.

Chaque face de réflexion principale 38 présente une section longitudinale parabolique comportant deux branches s'étendant de part et d'autre d'un plan de symétrie de la section et ayant la même longueur.

Comme on peut voir sur la figure 4, l'axe de symétrie de la section parabolique est parallèle à l'axe X et la face de réflexion principale 38 est agencée pour permettre une réflexion de la lumière transmise par le coupleur 46, par simple ou double réflexion sur la face 38, sous la forme d'un faisceau de rayons parallèles 56.

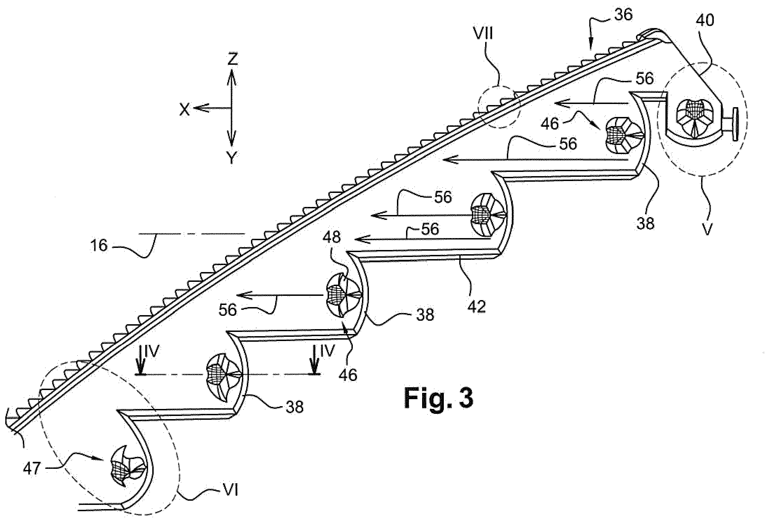

De manière générale, on a représenté sur les figures 3 à 7 le trajet des rayons lumineux par la référence 56.

Sur la figure 4, on voit que la face 38 présente une section transversale à profil en « V » formée par deux surfaces 38A et 38B formant, dans le cas présent, un angle de 90° entre elles dans le plan XZ et un angle de 45° avec les axes X et Z dans ce même plan. Une partie des rayons transmis par le coupleur 46 vers la face de réflexion principale 38 est réfléchie une première fois sur la surface 38A vers la surface 38B avant d'être dirigée vers la face de sortie 36. Une autre partie des rayons transmis par le coupleur 46 vers la face de réflexion principale 38 est réfléchie et dirigée directement vers la face de sortie 36.

Sur la figure 5, pour l'un des coupleurs, dans le cas présent le coupleur situé à une extrémité du guide 22, l'axe de symétrie de la section longitudinale parabolique de la face de réflexion principale 38 est perpendiculaire à l'axe X et la face de réflexion secondaire 40 forme un angle de 45° par rapport à l'axe X dans le plan de la nappe. Cet agencement du coupleur 46 et des faces de réflexion 38, 40 permet de réduire les dimensions et donc l'encombrement du guide 12 en le rendant plus compact. On notera que sur la figure 5, la première face de liaison 42 est parallèle à l'axe X et la deuxième face de liaison est perpendiculaire à l'axe X ; la deuxième face de liaison 42 pourrait cependant former, avec l'axe X, un angle différent de 90°. L'angle formé par cette deuxième face de liaison 42 et l'axe X dépend notamment de l'orientation relative des faces de réflexion principale 38 et secondaire 40.

Les faces de réflexion 38, 40 peuvent en outre comporter, au moins sur une portion de leur longueur, un aluminiage.

La face de sortie 36 illustrée sur les figures 2 et 3 est galbée selon différentes directions, notamment deux directions perpendiculaires entre-elles. Ainsi, sur la figure 2, la face de sortie 36 présente une forme courbe ou courbure relativement prononcée au droit de la carte de circuit imprimé 26 alors que sur la figure 3, vue dans un plan perpendiculaire à celui de la figure 2, la face de sortie 36 présente une courbure moins prononcée ; la face de sortie n'est globalement ni parallèle, ni perpendiculaire à l'axe optique 16.

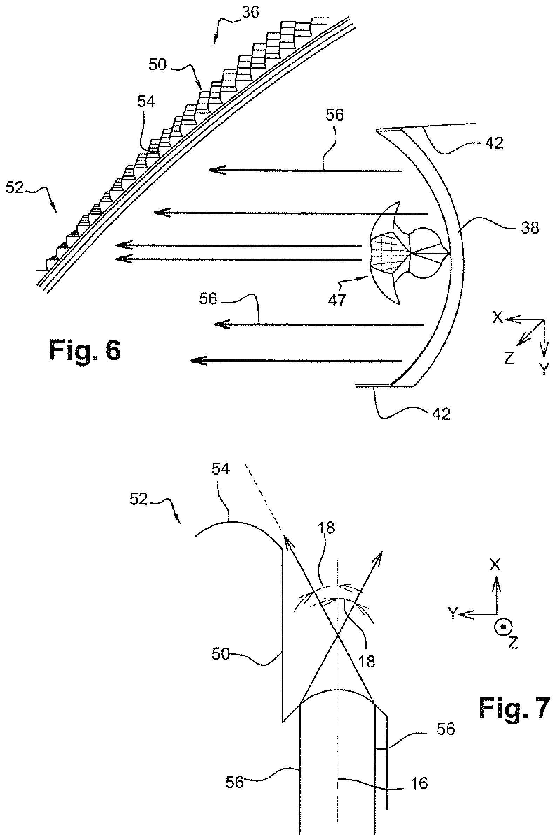

La figure 6 présente un coupleur 47 qui est différent des autres coupleurs 46. La forme et l'agencement des facettes 48 ont été modifiés afin de tenir compte de la courbure prononcée de cette partie du guide 22. Dans l'exemple présenté, seul le coupleur 47 est différent. On peut, en fonction du galbe du guide 22, avoir plus de deux types de coupleurs 46, 47 différents. Ainsi, selon la courbure du guide 22, on pourrait envisager de réaliser des coupleurs tous différents les uns des autres.

On a également représenté sur la figure 6, la face de sortie 36 en perspective. Cette face de sortie 36 a la forme d'un escalier ayant des marches planes 50 perpendiculaires à l'axe Y et des contres-marches 52 comportant chacune une ou plusieurs facettes de sortie de la lumière 54. Dans cet exemple, les facettes 54 ont une forme convexe.

Par exemple, les marches 50, dans la direction de l'axe optique 16, c'est-à-dire l'axe X, et les contres-marches 52, dans une direction perpendiculaire à l'axe X, peuvent avoir une longueur inférieure à 5 mm, de préférence inférieure à 3 mm. Dans l'exemple présenté, les marches et les contres-marches ont une longueur de 2 mm.

Nous allons maintenant décrire le trajet de la lumière dans le guide 22.

La lumière émise par chaque LED 30 est réfractée par la face d'entrée 44 dans le guide 22 et est transmise au coupleur 46, 47 où elle est réfléchie par les facettes de réflexion 48 dans le guide 22. Le coupleur 46, 47 transmet une partie de cette lumière directement à la face de réflexion principale 38 qui la dirige, sous la forme d'un faisceau à rayons parallèles 56, directement vers la face de sortie 36 selon une direction formant un angle de 5° au maximum par rapport à l'axe optique 16 du guide 22.

Par l'un des coupleurs, comme cela est représenté sur la figure 5, le faisceau à rayons parallèles est réfléchi par la face de réflexion principale 38 vers la face de réflexion secondaire 40 qui le réfléchit à son tour vers la face de sortie 36 selon une direction formant un angle de 5° au maximum par rapport à l'axe optique 16 du guide 22. Dans cette alternative, on comprend que le faisceau est indirectement dirigé de la face de réflexion principale 38 vers la face de sortie 36.

Du fait que les branches de la parabole formant la face de réflexion principale 38 sont de longueur similaire, soit un ratio petite longueur sur grande longueur supérieur à 80%, voire identique, la lumière est reçue de manière relativement uniforme sur la face de réflexion principale 38 et les rayons réfléchis 56 présentent une intensité plus uniforme que dans le cas où les branches de la parabole ont des longueurs différentes, soit un ratio petite longueur sur grande longueur inférieur à 80%, comme c'est le cas dans des guides de lumière de l'état de la technique. Ainsi, la formation d'une alternance de points plus lumineux et de points moins lumineux dans le faisceau émis par le guide 22 est réduite, voire très fortement réduite par rapport à ce qui peut être observé dans des guides connus.

Lorsque les rayons 56 atteignent la face de sortie 36, chaque facette 54 réfracte les rayons 56 comme cela est représenté sur la figure 7.

La lumière sortant du guide 22 est donc émise selon un angle 18 par rapport à l'axe optique 16. Cet angle est par exemple compris entre 0° et 30°, de préférence entre 0° et 25°.

Grâce à la forme convexe de chaque facette 54, les rayons 56 situés du côté droit de l'axe optique 16 sont réfractés vers la gauche et les rayons 56 situés du côté gauche de l'axe optique 16 sont réfractés vers la droite. Si bien que les rayons 56 réfractés vers la gauche, dans l'exemple présenté sur la figure 7, ne sont pas orientés vers la marche 50 adjacente à la facette 54 d'où sont émis les rayons 56. On conserve ainsi toute l'intensité des rayons réfractés par les facettes de diffraction 54.

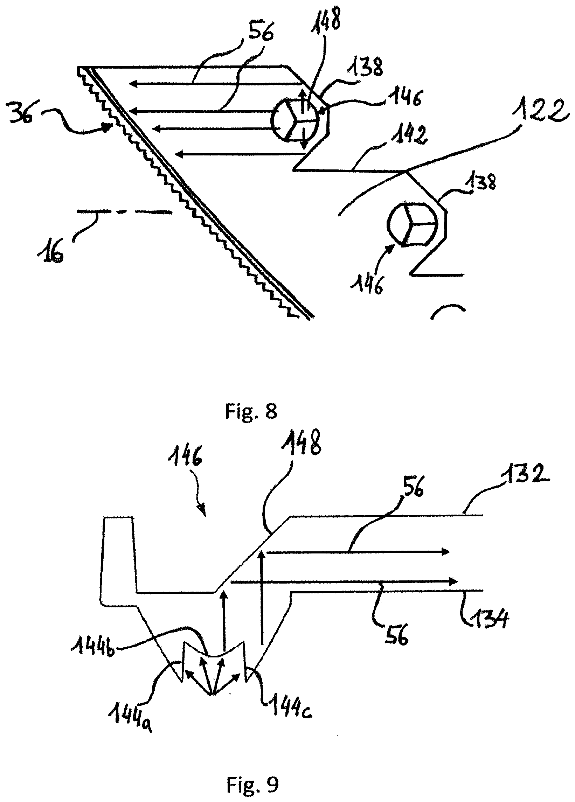

La figure 8 illustre un guide de lumière 122 selon l'invention, où le guide de lumière diffère de celui illustré en figure 3, par le fait qu'il présente des faces de réflexions principales 138 de forme différente et des coupleurs 146 différents.

Le guide 122 est également délimité par une face de sortie de la lumière 36, qui peut être identique à celle de la figure 3, par les faces de réflexion principales de la lumière 138 et par des faces de liaison 142 reliant les faces de réflexion 138. Les faces de liaison 142 sont de préférence parallèles à l'axe optique 16.

Le guide 122 comprend en outre des coupleurs 146. Chaque coupleur 146 comprend généralement plusieurs facettes de réflexion 148, trois dans cet exemple. Les coupleurs 146 sont positionnés sur la face principale de guidage 132, en vis-à-vis des faces d'entrée de chaque coupleur 146. On comprend donc qu'à chaque face d'entrée est associé un coupleur 146. Comme illustré en figure 9, cette face d'entrée présente plusieurs facettes d'entrées 144a, 144b et 144c.

Chaque facette d'entrée 144a, 144b et 144c est configurée pour transmettre la lumière émise par la LED 30 sur les facettes de réflexion 148 du coupleur 146 qui lui est associé.

Une partie de la lumière transmise par la face d'entrée au coupleur 146 est réfléchie par ce dernier et transmise directement vers la face de sortie 36 du guide 122, comme on peut le voir sur la figure 9.

Une autre partie de la lumière transmise par la face d'entrée au coupleur 146, est transmise par le coupleur 146 vers la face de réflexion principale 138 qui lui est associée.

Chaque face de réflexion principale 138 présente une section longitudinale avec des pans inclinés par rapport à l'axe optique 16 du guide, par exemple, comme illustré en figure 8, deux pans inclinés de 45° par rapport à l'axe optique 16 du guide. Dans cet exemple, les deux pans inclinés forment deux branches, qui peuvent, comme illustré, s'étendre de part et d'autre d'un plan de symétrie de la section et avoir la même longueur.

Comme on peut voir sur la figure 8, la face de réflexion principale 138 et ses pans sont agencés pour permettre une réflexion de la lumière transmise par le coupleur 146, par simple ou double réflexion sur la face 138, sous la forme d'un faisceau de rayons parallèles 56.

Par exemple, comme illustré, les facettes de réflexion 148, qui peuvent être planes, renvoient les rayons selon des directions environ perpendiculaires à l'axe optique 16. Les pans de la face de réflexion principale sont inclinés de 45° par rapport à l'axe optique 16 du guide 122 et réfléchissent alors ces rayons environ parallèlement à l'axe optique 16 du guide 122.

De manière générale, on a représenté sur les figures 8 à 9 le trajet des rayons lumineux par la référence 56.

Bien entendu, on pourra apporter à l'invention de nombreuses modifications sans sortir du cadre de celle-ci.

On peut, par exemple, remplacer les coupleurs 46, 47 par d'autres éléments permettant de diriger la lumière entrant par la face d'entrée 44 du guide vers la face de sortie 36 et vers la face de réflexion principale 38. On peut également envisager de positionner plusieurs faces de réflexion principale 38 de sorte que l'axe de la section parabolique ne soit pas parallèle à l'axe X.

## Revendications

1. Guide de lumière (22) pour un dispositif d'éclairage et/ou de signalisation (12) de véhicule automobile (10), comportant :
- au moins une face d'entrée (44),
- au moins un coupleur (46, 47),
- au moins une face de réflexion principale (38)
- une face de sortie (36),
le guide (22) étant agencé de sorte que, lorsqu'on dispose une source de lumière (30) à un point prédéterminé par rapport au guide (22), la face d'entrée (44) transmet au coupleur (46, 47) la lumière de la source et le coupleur (46, 47) transmet une partie de cette lumière à la face de réflexion principale (38) qui la dirige, sous la forme d'un faisceau à rayons parallèles (56), directement ou indirectement, vers la face de sortie (36) selon une direction formant un angle de 5° au maximum par rapport à un axe optique (16) du guide (22), ledit guide (22) présentant une forme de nappe, la face de sortie (36) étant sur au moins une des tranches de ladite nappe, chaque coupleur (46,47) étant associé à une face de réflexion principale (38), le guide comporte au moins deux coupleurs (46,47) et deux faces de réflexion principale (38), les faces de réflexion principales (38) sont reliées entre elles par au moins une face de liaison (42) à section rectiligne, parallèle à l'axe optique ou formant un angle inférieur à 5° avec l'axe optique (16), **caractérisé en ce que** le guide de lumière est réalisé d'un seul tenant par moulage d'une matière plastique.

2. Guide de lumière (22), selon la revendication précédente, agencé de sorte que la face de réflexion principale (38) dirige le faisceau à rayons parallèles (56) directement vers la face de sortie (36).

3. Guide de lumière (22) selon la revendication 1, comprenant en outre une face de réflexion secondaire (40) apte à réfléchir, vers la face de sortie (36), le faisceau provenant de la face de réflexion principale (38).

4. Guide de lumière (22) selon au moins l'une quelconque des revendications précédentes, dans lequel la face de réflexion principale (38) présente une section longitudinale comprenant deux branches.

5. Guide de lumière (22) selon la revendication précédente, dans lequel le ratio de longueur entre la branche la plus petite et la branche la plus grande est supérieur à 0.8.

6. Guide de lumière (22) selon la revendication 5, dans lequel les deux branches de la section longitudinale de la face de réflexion principale (38) ont une même longueur.

7. Guide de lumière (22) selon au moins l'une quelconque des revendications 4 à 6, dans lequel les branches s'étendent de part et d'autre d'un plan de symétrie de la section longitudinale.

8. Guide de lumière (22) selon au moins l'une quelconque des revendications 4 à 7, dans lequel ladite section longitudinale est une section parabolique.

9. Guide de lumière (22) selon au moins l'une quelconque des revendications précédentes, dans lequel la face de sortie (36) est de forme générale galbée.

10. Guide de lumière (22) selon au moins l'une quelconque des revendications précédentes, dans lequel la face de sortie (36) a la forme d'un escalier ayant des marches (50) parallèles à plus ou moins 10° près par rapport à l'axe optique (16) et des contres-marches (52) comportant chacune au moins une facette de sortie de la lumière (54) de sorte que la lumière sortant de chaque facette (54) est répartie dans un cône dont l'axe est l'axe optique (16) .

11. Guide de lumière (22) selon la revendication précédente, dans lequel ladite facette (54) est de forme convexe.

12. Ensemble d'un guide de lumière (22) selon au moins l'une quelconque des revendications précédentes et d'au moins une source de lumière (30), de préférence une LED.

13. Dispositif d'éclairage et/ou de signalisation (12) pour véhicule automobile, notamment un projecteur, comprenant un guide de lumière (22) selon au moins l'une quelconque des revendications 1 à 11 et/ou un ensemble selon la revendication 12.

## Patentansprüche

1. Lichtleiter (22) für eine Beleuchtungs- und/oder Signalisierungsvorrichtung (12) eines Kraftfahrzeugs (10), aufweisend:
- mindestens eine Eintrittsfläche (44),
- mindestens einen Koppler (46, 47),
- mindestens eine Hauptreflexionsfläche (38)
- eine Austrittsfläche (36),
wobei der Leiter (22) so angeordnet ist, dass, wenn eine Lichtquelle (30) an einem vorbestimmten Punkt bezogen auf den Leiter (22) angeordnet wird, die Eintrittsfläche (44) das Licht der Quelle an den Koppler (46, 47) überträgt und der Koppler (46, 47) einen Teil dieses Lichts an die Hauptreflexionsfläche (38) überträgt, die es in Form eines Bündels mit parallelen Strahlen (56) direkt oder indirekt in einer Richtung, die einen Winkel von höchstens 5° bezogen auf eine optische Achse (16) des Leiters (22) bildet, zu der Austrittsfläche (36) lenkt, wobei der Leiter (22) eine Form einer Lage aufweist, wobei sich die Austrittsfläche (36) auf mindestens einem der Abschnitte der Lage befindet, wobei jeder Koppler (46, 47) mit einer Hauptreflexionsfläche (38) in Verbindung steht, der Leiter mindestens zwei Koppler (46, 47) und zwei Hauptreflexionsflächen (38) aufweist, die Hauptreflexionsflächen (38) durch mindestens eine Verbindungsfläche (42) geradlinigen Querschnitts miteinander verbunden sind, die parallel zur optischen Achse verläuft oder einen Winkel kleiner als 5° mit der optischen Achse (16) bildet, **dadurch gekennzeichnet, dass** der Lichtleiter durch Formung eines Kunststoffmaterials einstückig ausgeführt ist.

2. Lichtleiter (22) nach dem vorhergehenden Anspruch, der so angeordnet ist, dass die Hauptreflexionsfläche (38) das Bündel mit parallelen Strahlen (56) direkt zu der Austrittsfläche (36) lenkt.

3. Lichtleiter (22) nach Anspruch 1, ferner umfassend eine Sekundärreflexionsfläche (40), die geeignet ist, das Bündel, das von der Hauptreflexionsfläche (38) kommt, zu der Austrittsfläche (36) zu reflektieren.

4. Lichtleiter (22) nach mindestens einem der vorhergehenden Ansprüche, wobei die Hauptreflexionsfläche (38) einen Längsschnitt aufweist, der zwei Schenkel umfasst.

5. Lichtleiter (22) nach dem vorhergehenden Anspruch, wobei das Längenverhältnis zwischen dem kleinsten und dem größten Schenkel größer als 0,8 ist.

6. Lichtleiter (22) nach Anspruch 5, wobei die zwei Schenkel des Längsschnitts der Hauptreflexionsfläche (38) einen selbe Länge aufweisen.

7. Lichtleiter (22) nach mindestens einem der Ansprüche 4 bis 6, wobei sich die Schenkel beiderseits einer Symmetrieebene des Längsschnitts erstrecken.

8. Lichtleiter (22) nach mindestens einem der Ansprüche 4 bis 7, wobei der Längsschnitt ein parabolischer Schnitt ist.

9. Lichtleiter (22) nach mindestens einem der vorhergehenden Ansprüche, wobei die Austrittsfläche (36) eine gerundete Form aufweist.

10. Lichtleiter (22) nach mindestens einem der vorhergehenden Ansprüche, wobei die Austrittsfläche (36) die Form einer Treppe aufweist, die Stufen (50) aufweist, die um plus oder minus 10° genau bezogen auf die optische Achse (16) parallel sind, und Setzstufen (52), die jeweils mindestens eine Austrittsfacette des Lichts (54) aufweisen, so dass das Licht, das aus jeder Facette (54) austritt, in einem Kegel verteilt wird, dessen Achse die optische Achse (16) ist.

11. Lichtleiter (22) nach dem vorhergehenden Anspruch, wobei die Facette (54) eine konvexe Form aufweist.

12. Anordnung eines Lichtleiters (22) nach mindestens einem der vorhergehenden Ansprüche und mindestens einer Lichtquelle (30), vorzugsweise einer LED.

13. Beleuchtungs- und/oder Signalisierungsvorrichtung (12) für ein Kraftfahrzeug, insbesondere ein Scheinwerfer, umfassend einen Lichtleiter (22) nach mindestens einem der Ansprüche 1 bis 11 und/oder einer Anordnung nach Anspruch 12.

## Claims

1. Light guide (22) for a lighting and/or signaling device (12) of an automobile vehicle (10), comprising:
- at least one entry face (44),
- at least one coupler (46, 47),
- at least one main reflection face (38)
- an exit face (36),
the guide (22) being arranged in such a manner that, when a light source (30) is disposed at a predetermined point with respect to the guide (22), the entry face (44) transmits the light from the source to the coupler (46, 47) and the coupler (46, 47) transmits a part of this light to the main reflection face (38) which directs it, in the form of a beam of parallel rays (56), directly or indirectly, toward the exit face (36) in a direction forming an angle of 5° at the most with respect to an optical axis (16) of the guide (22), said guide (22) taking the form of a sheet, the exit face (36) being on at least one of the edge faces of said sheet, each coupler (46,47) being associated with a main reflection face (38), the guide comprises at least two couplers (46,47) and two main reflection faces (38), the main reflection faces (38) are connected together by at least one link face (42) with a rectilinear cross-section, preferably parallel to the optical axis or forming an angle less than 5° with the optical axis (16), **characterized in that** the light guide is formed as a single piece by molding of a plastic material.

2. Light guide (22), according to the preceding claim, arranged in such a manner that the main reflection face (38) directs the beam of parallel rays (56) directly toward the exit face (36).

3. Light guide (22) according to Claim 1, furthermore comprising a secondary reflection face (40) designed to reflect, toward the exit face (36), the beam coming from the main reflection face (38).

4. Light guide (22) according to at least any one of the preceding claims, in which the main reflection face (38) has a longitudinal cross-section comprising two branches.

5. Light guide (22) according to the preceding claim, in which the ratio of length between the smaller branch and the larger branch is greater than 0.8.

6. Light guide (22) according to Claim 5, in which the two branches of the longitudinal cross-section of the main reflection face (38) have the same length.

7. Light guide (22) according to at least any one of Claims 4 to 6, in which the branches extend on either side of a plane of symmetry of the longitudinal cross-section.

8. Light guide (22) according to at least any one of Claims 4 to 7, in which said cross-section is a parabolic cross-section.

9. Light guide (22) according to at least any one of the preceding claims, in which the shape of the exit face (36) is of generally curved form.

10. Light guide (22) according to at least any one of the preceding claims, in which the exit face (36) has the shape of a staircase having steps (50) parallel - to the nearest 10° - with respect to the optical axis (16) and counter-steps (52) each comprising at least one exit facet for the light (54) such that the light exiting from each facet (54) is distributed within a cone whose axis is the optical axis (16).

11. Light guide (22) according to the preceding claim, in which said facet (54) has a convex shape.

12. Light guide assembly (22) according to at least any one of the preceding claims and with at least one light source (30), preferably a LED.

13. Lighting and/or of signaling device (12) for an automobile vehicle, notably a headlamp, comprising a light guide (22) according to at least any one of Claims 1 to 11 and/or an assembly according to Claim 12.
